# EUROPÄISCHE PATENTSCHRIFT

(11) **EP 0 661 351 B1**
(45) Veröffentlichungstag und Bekanntmachung des Hinweises auf die Patenterteilung: **10.11.1999**
(21) Anmeldenummer: 94119272.6
(22) Anmeldetag: 07.12.1994
(51) Int. Cl.: C09B 29/36, C09B 67/22, D06P 3/52

(54) **Monoazocarbazolfarbstoffe**
Monoazocarbazol dyestuffs
Colorants monoazocarbazoliques

(30) Priorität: 03.01.1994 DE 4400016; 02.04.1994 DE 4411612
(43) Veröffentlichungstag der Anmeldung: 05.07.1995
(73) Patentinhaber: DyStar Textilfarben GmbH & Co. Deutschland KG, 60318 Frankfurt am Main (DE)
(72) Erfinder: Bühler, Ulrich, Dr., D-63755 Alzenau (DE)

(56) Entgegenhaltungen:
- EP-A- 0 499 090
- EP-A- 0 548 715
- EP-A- 0 551 903
- US-A- 3 897 203
- US-A- 3 984 199

## Beschreibung

EP-A-551 903 beschreibt einen Monoazocarbazolfarbstoff, dessen Herstellung und Verwendung zum Färben von polyesterhaltigen Fasermaterialien.

Die vorliegende Erfindung betrifft Monoazocarbazolfarbstoffe, Verfahren zu ihrer Herstellung und ihre Verwendung, insbesondere zum Färben von Automobilbezugsstoffen.

Farbstoffe zum Färben von Automobilbezugsstoffen müssen eine hohe Lichtechtheit besitzen, da diese Bezugsstoffe im Innern des Automobils einer intensiven Sonneneinstrahlung ausgesetzt sein können. Erschwerend kommt dabei hinzu, daß sich das Innere des Automobils stark erwärmen kann.

Beim Belichten der Färbung eines wenig lichtechten Farbstoffs ändert sich die Farbtiefe oder der Farbton dieser Färbung. Wird bei einer Kombinationsfärbung ein wenig lichtechter Farbstoff eingesetzt, schlägt beim Belichten der Farbton dieser Färbung besonders deutlich um. Das Erfordernis der hohen Lichtechtheit trifft deshalb für alle Komponenten einer Farbstoffmischung zu.

Automobilbezugsstoffe sind vorwiegend in gedeckten Nuancen, beispielsweise in Beige-, Oliv-, Grün-, Gelbbraun-, Grau- und Brauntönen, gefärbt. Alle diese Nuancen werden durch den Einsatz von Farbstoffkombinationen erhalten, wobei eine Gelbkomponente jeweils unerläßlich ist.

Als Gelbfarbstoffe werden beim Färben von Automobilbezugsstoffen Farbstoffe der Formeln II bis IV 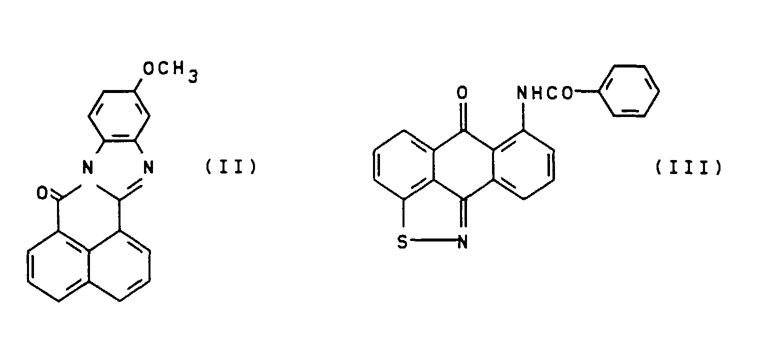 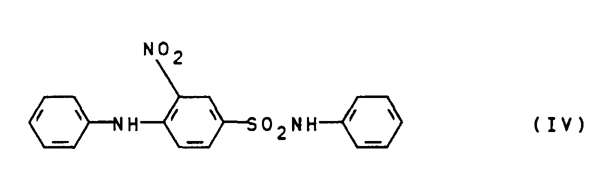 eingesetzt. Sie liefern auch in hellen Tönen Färbungen mit hervorragender Lichtechtheit.

Die Gelbfarbstoffe der Formeln II bis IV zeigen nun gravierende Mängel. Sie haben allesamt eine geringe Molextinktion. Darüberhinaus sind die Herstellkosten für die Farbstoffe der Formeln II und III sehr hoch. Der Farbstoff der Formel II zeigt eine störende Fluoreszenz und hat nur eine mittlere Sublimierechtheit. Die Farbstoffe der Formeln III und IV haben eine schlechte Dispersionsstabilität, die sich deutlich bemerkbar macht, wenn sie entsprechend den rationellen modernen Färbemethoden z.B. in kurzen Flottenverhältnissen bei hoher Zirkulation auf Ware hoher Wickeldichte gefärbt werden. Der Farbstoff der Formel IV baut darüberhinaus schlecht auf und ist pH-empfindlich.

Es besteht deshalb Bedarf nach Gelbkomponenten, die eine hohe Molextinktion haben und die Probleme bei der Applikation und bei den Gebrauchsechtheiten der oben genannten Gelbfarbstoffe nicht haben.

Überraschenderweise wurde nun gefunden, daß bestimmte Carbazolazofarbstoffe diese Voraussetzungen erfüllen. Eine Reihe von Monoazocarbazolfarbstoffen sind bereits bekannt, so zum Beispiel aus der DE-A 22 12 755 solche mit orangenen bis rotvioletten Farbtönen.

Die vorliegende Erfindung betrifft Monoazocarbazolfarbstoffe der allgemeinen Formel I 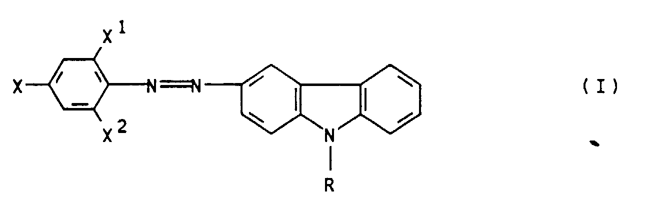 in der
**X** (C₁-C₄)-Alkylsulfonyl;
(C₁-C₄)-Alkylsulfonyl, das substituiert ist durch Hydroxy, Chlor, Brom, Cyan, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Phenylsulfonyl;
Phenylsulfonyl, das ein- oder zweifach substituiert ist durch Methyl, Ethyl, Methoxy, Ethoxy, Methoxycarbonyl, Ethoxycarbonyl, Fluor, Chlor oder Brom;
Aminosulfonyl;
Phenylaminosulfonyl;
Phenylaminosulfonyl, das ein- oder zweifach substituiert ist durch Methyl, Ethyl, Methoxy, Ethoxy, Methoxycarbonyl, Ethoxycarbonyl, Fluor oder Chlor;
(C₁-C₄)-Alkylaminosulfonyl;
(C₁-C₄)-Alkylaminosulfonyl, das substituiert ist durch Hydroxy, Chlor, Brom, Cyan, Phenyl, Phenoxy, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Di-(C₁-C₄)-alkylaminosulfonyl;
Di-(C₁-C₄)-alkylaminosulfonyl, wobei eine oder beide Alkylgruppen unabhängig voneinander substituiert sind durch Hydroxy, Chlor, Brom, Cyan, Phenyl, Phenoxy, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
(C₁-C₄)-Alkylcarbonyl;
(C₁-C₄)-Alkylcarbonyl, das durch Hydroxy, Chlor, Brom, Cyan, (C₁-C₄)-Alkoxy, Phenoxy oder Phenyl substituiert ist;
Phenylcarbonyl;
Phenylcarbonyl, das ein- oder zweifach substituiert ist durch Methyl, Ethyl, Methoxy, Ethoxy, Methoxycarbonyl, Ethoxycarbonyl, Fluor, Chlor oder Brom;
(C₁-C₄)-Alkoxycarbonyl;
(C₁-C₄)-Alkoxycarbonyl, das substituiert ist durch Hydroxy, Chlor, Brom, Cyan, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Phenoxycarbonyl;
Phenoxycarbonyl, das ein- oder zweifach substituiert ist durch Methyl, Methoxy oder Chlor;
Aminocarbonyl;
Phenylaminocarbonyl;
Phenylaminocarbonyl, das ein- oder zweifach substituiert ist durch Methyl, Ethyl, Methoxy, Ethoxy, Methoxycarbonyl, Ethoxycarbonyl, Fluor, Chlor oder Brom;
(C₁-C₄)-Alkylaminocarbonyl;
(C₁-C₄)-Alkylaminocarbonyl, das substituiert ist durch Hydroxy, Chlor, Brom, Cyan, Phenyl, Phenoxy, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Di-(C₁-C₄)-alkylaminocarbonyl;
Di-(C₁-C₄)-alkylaminocarbonyl, wobei eine oder beide Alkylgruppen unabhängig voneinander substituiert sind durch Hydroxy, Chlor, Brom, Cyan, Phenyl, Phenoxy, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Trifluormethyl;
Fluor;
Chlor;
Brom; oder
Wasserstoff bedeutet,
**X**^{**1**} **und X**^{**2**} unabhängig voneinander Chlor oder Brom bedeuten; und
**R** Wasserstoff; (C₁-C₆)-Alkyl;
(C₁-C₆)-Alkyl, das substituiert ist durch Cyan, Hydroxy, Chlor, Brom, (C₁-C₄)-Alkoxy, Alkoxyalkoxy mit insgesamt bis zu sechs Kohlenstoffatomen, Hydroxyethoxy, Hydroxyethoxyethoxy, Phenoxy, Phenyl, (C₁-C₄)-Alkylcarbonyloxy, (C₁-C₄)-Alkoxycarbonyl oder durch Hydroxy, (C₁-C₄)-Alkoxy, Phenyl, Phenoxy, Chlor, Brom oder Cyan substituiertes (C₁-C₄)-Alkylcarbonyloxy oder (C₁-C₄)-Alkoxycarbonyl;
oder Allyl bedeutet.

Alkyl- und Alkoxygruppen können geradkettig oder verzweigt sein, wobei primär verzweigt bevorzugt und geradkettig besonders bevorzugt ist.

(C₁-C₄)-Alkyl ist beispielsweise Methyl, Ethyl, n-Propyl, i-Propyl, n-Butyl, i-Butyl und sek.Butyl. Analoges gilt für (C₁-C₄)-Alkoxy. (C₁-C₆)-Alkyl kann darüberhinaus für n-Pentyl, i-Pentyl, sek.Pentyl, n-Hexyl und i-Hexyl stehen.

Durch Hydroxy oder (C₁-C₄)-Alkoxy, substituiertes (C₁-C₄)-Alkyl ist beispielsweise ist 2-Hydroxyethyl, 4-Hydroxybutyl, 2,3-Dihydroxypropyl, 2-Methoxy-, 2-Ethoxy-, 2-n-Propoxy-, 2-i-Propoxy-, 2-n-Butoxy, 2-i-Butoxy-, 2-sek.Butoxy-, 2-tert.Butoxyethyl, 3-Methoxy-, 3-Ethoxy-, 3-n-Propoxy-, 3-i-Propoxy-, 3-n-Butoxy-, 3-sek.Butoxypropyl, 4-Methoxy-, 4-Ethoxy-, 4-n-Propoxy-, 4-n-Butoxybutyl, 2-Hydroxy-3-methoxy-, -3-ethoxy- oder -3-n-butoxypropyl.

Durch Hydroxy oder (C₁-C₄)-Alkoxy substituiertes (C₁-C₆)-Alkyl ist darüberhinaus beispielsweise 6-Hydroxyhexyl, 6-Methoxy- oder 6-Ethoxyhexyl.

Durch Phenoxy oder Phenyl substituiertes (C₁-C₄)-Alkyl ist beispielsweise Phenoxymethyl, -ethyl, -propyl und -butyl, Benzyl, Phenethyl und Phenpropyl.

Durch Phenoxy oder Phenyl substituiertes (C₁-C₆)-Alkyl ist darüberhinaus beispielsweise 6-Phenoxy bzw. 6-Phenylhexyl.

Substituiertes (C₁-C₄)-Alkoxy ist beispielsweise 2-Hydroxyethoxy, 4-Hydroxybutoxy, 2-Hydroxypropoxy, 2,3-Dihydroxypropoxy, 2-Methoxy-, 2-Ethoxy-, 2-n-Propoxy-, 2-i-Propoxy-, 2-n-Butoxy-, 2-i-Butoxy-, 2-tert.Butoxyethoxy, 3-Methoxypropoxy, 4-Methoxy-, 4-Ethoxy-, 4-n-Butoxybutoxy, 2-Phenoxyethoxy, 4-Phenoxyethoxy, Benzyloxy, Phenethoxy und 3-Phenpropoxy.

Alkoxyalkoxy mit insgesamt bis zu 6 C-Atomen ist beispielsweise Methoxy-, Ethoxy-, n-Propoxy-, i-Propoxy-, n-Butoxy-, i-Butoxy- und sek.Butoxyethoxy, 4-Methoxy- und 4-Ethoxybutoxy.

Substituiertes Alkyl in den (C₁-C₄)-Alkylcarbonyloxyresten ist beispielsweise Hydroxy-, Methoxy-, Ethoxy-, n-Propoxy-, i-Propoxy-, n-Butoxy, i-Butoxy, sek.Butoxy-, Phenoxy-, Phenyl-, Chlor- oder Cyanmethyl, -ethyl, -propyl oder -butyl.

Substituierte Alkylreste bzw. gegebenenfalls substituierte Alkoxyreste in für X stehenden mono- oder di-Alkylaminosulfonyl- oder -carbonylgruppen, Alkylsulfonyl- bzw. Alkoxycarbonylgruppen haben vorzugsweise 2 bis 4 C-Atome und sind vorzugsweise durch Hydroxy und insbesondere durch (C₁-C₄)-Alkoxy substituiert. Substituierte Alkylreste in für X stehenden Alkylsulfonylgruppen sind vorzugsweise auch durch Alkylcarbonyloxy substituierte Ethylreste. Substituierte Alkylreste in für X stehenden Alkylcarbonylgruppen sind vorzugsweise durch (C₁-C₄)-Alkoxy substituierte (C₁-C₃)-Alkylreste.

Alkylcarbonyloxygruppen sind vorzugsweise Acetoxy und Propionoxy.

Phenyl- bzw. Phenoxysubstituenten sind vorzugsweise unsubstituiert. Bei Substitution durch Phenyl- oder Phenoxyreste ist die Anzahl dieser Reste an Chromophor insgesamt vorzugsweise 1.

Substituierte für R stehende Alkylreste sind vorzugsweise (C₃-C₄)-Alkyl und insbesondere Ethyl. Bevorzugte Substituenten an für R stehenden Alkylresten sind Cyan, Hydroxy, (C₁-C₄)-Alkoxy und (C₁-C₄)-Alkylcarbonyloxy.

Bevorzugt ist X¹ Chlor, besonders bevorzugt ist X² ebenfalls Chlor.

Bevorzugt bedeutet X
(C₁-C₄)-Alkylsulfonyl;
(C₁-C₄)-Alkylsulfonyl, das durch Hydroxy, Chlor, Brom, Cyan, (C₁-C₄)-Alkoxy oder (C₁-C₄)-Alkylcarbonyloxy substituiert ist,
(C₁-C₄)-Alkylaminosulfonyl,
(C₁-C₄)-Alkylaminosulfonyl, das substituiert ist durch Hydroxy, Chlor, Brom, Cyan oder (C₁-C₄)-Alkoxy;
Di-(C₁-C₄)-alkylaminosulfonyl,
Di-(C₁-C₄)-alkylaminosulfonyl, wobei eine oder beide Alkylgruppen unabhängig voneinander substituiert sind durch Hydroxy, Chlor, Brom, Cyan oder (C₁-C₄)-Alkoxy;
(C₁-C₄)-Alkylcarbonyl;
(C₁-C₄)-Alkylcarbonyl, das substituiert ist durch Hydroxy, Chlor, Brom, Cyan oder (C₁-C₄)-Alkoxy;
(C₁-C₄)-Alkoxycarbonyl;
(C₁-C₄)-Alkoxycarbonyl, das substituiert ist durch Hydroxy, Chlor, Brom, Cyan oder (C₁-C₄)-Alkoxy;
(C₁-C₄)-Alkylaminocarbonyl;
(C₁-C₄)-Alkylaminocarbonyl, das substituiert ist durch Hydroxy, Chlor, Brom, Cyan oder (C₁-C₄)-Alkoxy;
Di-(C₁-C₄)-alkylaminocarbonyl, wobei eine oder beide Alkylgruppen unabhängig voneinander substituiert sind durch Hydroxy, Chlor, Brom, Cyan oder (C₁-C₄)-Alkoxy;
Trifluormethyl;
Fluor;
Chlor;
Brom; oder
Wasserstoff.

R bedeutet bevorzugt Wasserstoff; (C₁-C₆)-Alkyl;
(C₂-C₄)-Alkyl, das substituiert ist durch Cyan, Hydroxy, Chlor, Brom, (C₁-C₄)-Alkoxy, Alkoxyalkoxy mit insgesamt bis zu 6 Kohlenstoffatomen, Hydroxyethoxy, Hydroxyethoxyethoxy oder (C₁-C₄)-Alkylcarbonyloxy; oder Allyl.

Bevorzugte Farbstoffe sind solche mit bevorzugten Merkmalen für X, X¹, X² und R.

Die vorliegende Erfindung betrifft auch Mischungen von mindestens zwei Monoazofarbstoffen der allgemeinen Formel I.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsantil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70 : 30 bis 30 : 70 bevorzugt, d.h. der Gewichtsanteil eines Farbstoffs beträgt 30 bis 70 %.

Eine weitere Ausführungsform der vorliegenden Erfindung betrifft Mischungen von einem oder mehreren der Farbstoffe der allgemeinen Formel I mit einem oder mehreren Farbstoffen, wie sie üblicherweise zum Färben von Polyesterfasern oder Polyestertextilmaterialien für Automobilbezugsstoffe verwendet werden. Die genannten Farbstoffe zum Färben von Automobilbezugsstoffen sind insbesondere Azo-, Disazo-, Anthrachinon-, Nitro-, Naphthalimid-, Isothiazolanthron, Chinaphtholon und Terephthalimid-Farbstoffe. Besonders bevorzugte Farbstoffe dieser Art sind die Colour-Index-Farbstoffe Yellow 23, Yellow 38, Yellow 42, Yellow 51, Yellow 57, Yellow 59, Yellow 64, Yellow 65, Yellow 71, Yellow 86, Yellow 108, Yellow 122, Yellow 149, Yellow 160, Yellow 163, Yellow 182, Orange 29, Orange 30, Orange 32, Orange 38, Orange 41, Orange 45, Orange 61, Orange 62, Orange 73, Orange 76, Orange 93, Red 60, Red 86, Red 91, Red 92, Red 127, Red 134, Red 138, Red 159, Red 167, Red 191, Red 202, Red 207, Red 229, Red 258, Red 279, Red 283, Red 302, Red 323, Blue 27, Blue 54, Blue 56, Blue 60, Blue 73, Blue 77, Blue 79:1, Blue 81, Blue 87, Blue 158, Blue 197, Blue 214, Blue 266, Blue 297, Blue 333, Violet 27, Violet 28, Violet 38, Violet 57 und Violet 95.

Die Gewichtsverhältnisse der Farbstoffe der allgemeinen Formel I bzw. deren Mischungen und der genannten Farbstoffe sind völlig unkritisch und richten sich nach der gewünschten Farbnuance.

Die Herstellung der erfindungsgemäßen Farbstoffe der allgemeinen Formel I erfolgt vorzugsweise dadurch, daß man eine Verbindung der allgemeinen Formel II 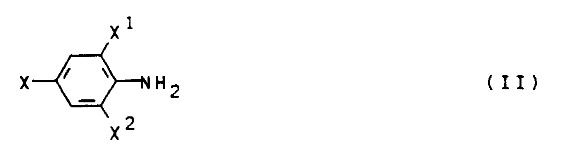 worin
X, X¹ und X² wie oben angegeben definiert sind, diazotiert und auf Verbindungen der allgemeinen Formel III 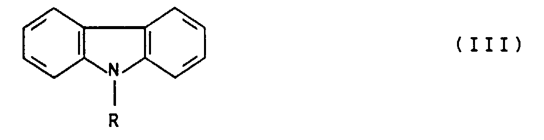 worin
R wie oben angegeben definiert ist, kuppelt.

Die Verbindungen der allgemeinen Formel II und III sind größtenteils bekannt und können nach dem Fachmann bekannten Methoden hergestellt werden.

Die Diazotierung und Kupplung kann beispielsweise in Analogie zu den Methoden, wie sie in US 3 984 199 oder EP 77 066 beschrieben sind, erfolgen.

Die erfindungsgemäßen Farbstoffe der allgemeinen Formel I bzw. die erfindungsgemäßen Mischungen werden vor dem Färben formiert, d.h. sie werden in Gegenwart von Wasser und von Dispergiermitteln in geeigneten Mühlen, wie z.B. Kugel-oder Sandmühlen, gemahlen und, wenn eine pulverförmige Farbstoff-Formierung hergestellt werden soll, anschliessend sprühgetrocknet.

Geeignete Dispergiermittel sind z.B. anionische oder nichtionische Dispergiermittel, die auch gemeinsam eingesetzt werden können.

Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkylaryl-sulfonate, sowie Alkyl-aryl-polyglykolethersulfate.

Nichtionische Dispergiermittel oder Emulgatoren sind z.B. Umsetzungsprodukte von Alkylenoxiden, wie z.B. Ethylen-oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an (C₈-C₁₀)-Alkylphenole.

Die Mahlung erfolgt bei Temperaturen zwischen 10 und 90°C, vorzugsweise bei 30 bis 60°C. Bei der gemeinsamen Formierung getrennt hergestellter Einzelkomponenten ist die gemeinsame Mahlung bei Temperaturen über 30°C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengrößen der Farbstoffe liegen im allgemeinen zwischen 0,5 und 5µ, vorzugsweise bei etwa 1µ.

Die erfindungsgemäßen Farbstoffmischungen können nach verschiedenen Verfahren hergestellt werden, z.B. durch Mischen der getrennt hergestellten Einzelfarbstoffe, wobei bevorzugt bereits formierte Einzelfarbstoffe gemischt werden. Dieser Mischprozeß erfolgt in geeigneten Mischern, wie z.B. Taumelmischern oder Rührwerken. Getrennt formierte Einzelfarbstoffe können aber auch durch Einrühren in Färbeflotten gemischt werden.

Erfindungsgemäße Farbstoffmischungen können weiterhin bevorzugt durch gemeinsame Formierung der getrennt hergestellten Mischungskomponenten, d.h. durch gemeinsame Mahlung und/ oder Sprühtrocknung, hergestellt werden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2¹/2-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen kann in an sich bekannter Weise erfolgen, vorzugsweise aus wäßriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 180 bis 230°C mit HT-Dampf, Druckdampf oder Trockenhitze behandelt wird. Man erhält auf diese Weise sehr farbstarke Färbungen mit sehr guten Gebrauchsechtheiten, wie Thermofixier-, Wasch-, Wasser- und Thermomigrierechtheit sowie insbesondere einer sehr guten Lichtechtheit.

Die erfindungsgemäßen Farbstoffe und Farbstoffmischungen eignen sich ganz besonders zum Färben und Bedrucken von Polyesterfasern und Polyestertextilmaterialien für Automobilbezugsstoffe. Bevorzugt werden zu diesem Zweck die oben beschriebenen Farbstoffe der allgemeinen Formel I bzw. Mischungen davon mit einem oder mehreren Farbstoffen, wie sie üblicherweise zum Färben von Automobilbezugsstoffen verwendet werden, eingesetzt. Es ist darüberhinaus bevorzugt das Färben von Automobilbezugsstoffen in Gegenwart von UV-Absorbern auszuführen. Geeignete UV-Absorber sind beispielsweise solche auf Basis Benzophenon oder Benztriazol.

Einzelheiten zum Färben von Automobilbezugsstoffen sind beispielsweise in Textilveredelung 20 (1985), Nr. 4, Seite 126, 20 (1985), Nr. 11, Seite 356 und 23 (1988), Nr. 5, Seite 170 beschrieben.

Die erfindungsgemäßen Farbstoffe und Farbstoffmischungen eignen sich weiter ganz besonders zum Färben und Bedrucken von alkalisierten Polyesterfasern und Polyester-Mikrofasern. Einzelheiten dazu sind beispielsweise beschrieben in Chemiefasern (Textilindustrie 41./93. Jahrgang, Sept. 1991, S. 1118; Textilveredlung 28 (1993), S. 88, und Textilveredlung 28 (1993), S. 96).

Die erfindungsgemäßen Farbstoffe und Farbstoffmischungen eignen sich weiter ganz besonders zum Färben von Polyesterfasern und Polyesterfasermaterialien im alkalischen Medium bei pH-Werten bis pH 11, insbesondere bei pH 8 bis pH 11. Einzelheiten zu dieser Färbemethode sind beispielsweise in der DE-A 39 38 631 oder der EP-A 499 090 beschrieben.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden. In den bei obigen Applikationen eingesetzten Färbeflotten und Druckpasten sollen die erfindungsgemäßen Farbstoffe bzw. Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat und insbesondere sogenannten Saurespender" wie z.B. Butyrolacton, Monochloracetamid, Natriumchloracetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglykolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel und die oben genannten "Säurespender".

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5, eingestellt. Es ist vorteilhaft, den eingestellten pH-Wert abzupuffern und eine ausreichende Menge eines Puffersystems zuzusetzen. Ein vorteilhaftes Puffersystem ist z.B. das System Essigsäure/ Natriumacetat.

Soll der Farbstoff oder die Farbstoffmischung für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die erfindungsgemäßen Farbstoffe und Farbstoffmischungen bieten im Vergleich zu den gelben Farbstoffen des Handels überraschenderweise deutliche Vorteile, insbesondere bezüglich Aufbau- und Ausziehverhalten. Mit ihnen lassen sich größere Farbtiefen erzielen und sie sind ökonomischer, da sie vollständiger auf das Färbegut aufziehen und das Abwasser weniger stark belasten. Ihre Temperaturempfindlichkeit ist geringer, das heißt die Farbtiefenschwankungen bei Schwankungen der Färbetemperatur sind kleiner. Sie färben auch bei verkürzter Färbezeit und ziehen auf Substrate wie beispielsweise modifiziertes Polyester, Polyamid, Cellulosetriacetat und Cellulose-2 1/2-acetat auf. Sie ergeben auch bei hohen Wickeldichten des Substrats und bei kurzen Flottenverhältnissen egale, reproduzierbare Färbungen und sind gegenüber pH-Schwankungen im Färbebad nahezu unempfindlich.

Aufgrund ihrer auch bei höherer Temperatur und Luftfeuchtigkeit hervorragenden Lichtechtheit und ihrer guten bis sehr guten Trockenhitzefixierechtheit sind sie hervorragend geeignet zum Färben von Automobilbezugsstoffen, gegebenenfalls in Mischungen wie oben beschrieben.

Insgesamt ergibt sich somit für die erfindungsgemäßen Farbstoffe und Farbstoffmischungen ein nicht vorhersehbarer erheblicher anwendungstechnischer Vorteil im Vergleich zum Stand der Technik.

Die Erfindung wird durch die folgenden Beispiele näher erläutert. Prozentangaben sind Gewichtsprozente.

### Beispiel 1:

24,0 g 2,6-Dichlor-4-methylsulfonylanilin werden in 100 ml 90%iger Essigsäure mit 33,3 g 40%iger Nitrosylschwefelsäure diazotiert. In der so erhaltenen Diazolösung wird bei Raumtemperatur langsam 21,1 g N-Hydroxyethylcarbazol zugegeben und bis zur Vervollständigung der Kupplungsreaktion gerührt. Dann wird der ausgefallene Farbstoff abfiltriert, mit 90%iger Essigsäure und dann mit Wasser gewaschen und getrocknet. Es werden 35 g eines Farbstoffs der Formel Ia erhalten, der sich in Essigester mit gelber Farbe löst, bei 178 bis 180°C schmilzt und im UV (Phthalsäuredimethylester) bei 395 nm sein Absorptionsmaximum hat. 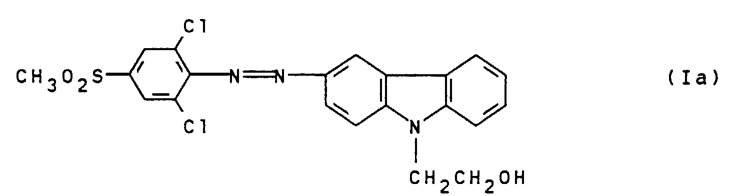 1,25 g eines 30%igen Farbstoffpulvers des Farbstoffs der Formel Ia werden in 2000 g Wasser dispergiert. Die Dispersion wird mit 4 g Natriumacetat, 2 g eines handelsüblichen Dispergiermittels auf Basis eines Kondensationsprodukts aus Naphthalinsulfonsäure und Formaldehyd versetzt und mit Essigsäure auf einen pH-Wert von 4, gestellt. In die so erhaltene Färbeflotte bringt man 100 g eines texturierten Polyestergewebes auf Basis Polyethylenglykolterephthalat ein und färbt 1/2 Stunde bei 130°C. Nach anschließendem Spülen, reduktiver Nachbehandlung mit einer 0,2%igen Natriumdithionitlösung während 15 Minuten bei 70 bis 80°C, Spülen und Trocknen, erhält man eine farbstarke gelbe Färbung mit hervorragenden coloristischen Eigenschaften.

### Beispiel 2:

26,1 g 2,6-Dichlor-4-N,N-diethylaminocarbonylanilin werden in analoger Weise zu Beispiel 1 diazotiert. Die so erhaltene Diazolösung wird bei Raumtemperatur auf 9,8 g N-Ethylcarbazol, das in 140 ml 75%iger Essigsäure fein verteilt wurde, gekuppelt. Der nach dem Auskuppeln ausgefallene Farbstoff wird abfiltiert, mit Essigsäure und anschließend mit Wasser gewaschenund getrocknet. Es werden erhalten 37,4 g eines Farbstoffs der Formel Ib, der sich in Essigester mit gelber Farbe löst und bei 131 bis 133°C schmilzt. 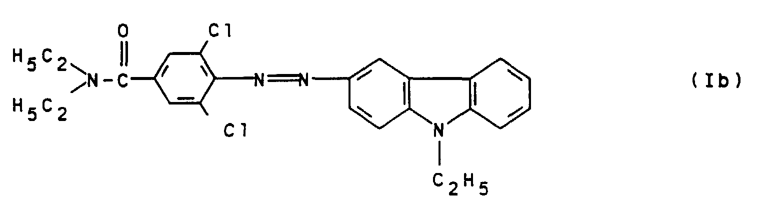 0,4 g eines 25%igen Farbstoffpulvers des Farbstoffs der Formel Ib, 0,04 g einer handelsüblichen Pulvereinstellung von C.I. Disperse Red 279 und 0,08 % einer handelsüblichen Pulvereinstellung von C.I. Disperse Blue 27 werden in 2000 g Wasser dispergiert, mit 2 g eines anionischen linearen Polykondensats, 4 g Natriumacetat und 3 g eines handelsüblichen UV-Absorbers auf Basis Benztriazol versetzt und die Dispersion mit Essigsäure auf pH 5 gestellt. In die so erhaltene Färbeflotte bringt man 100 g eines Polyestergewebes ein und färbt in Analogie zu Beispiel 1. Man erhält auf diese Weise eine beige Färbung. Wird diese Färbung einer Belichtung nach FAKRA DIN 75202 unterworfen, zeigt sie eine sehr hohe Lichtechtheit und nahezu Farbtonkonstanz.

### Beispiel 3:

19,7 g 2,4,6-Trichloranilin werden in 100 ml 90%iger Essigsäure in Analogie zur Diazotierung in Beispiel 1 diazotiert und in Analogie zur Kupplung im Beispiel 2 auf N-Ethylcarbazol gekuppelt. Der dabei entstandene gelbe Farbstoff der Formel Ic schmilzt bei 181 bis 183°C. 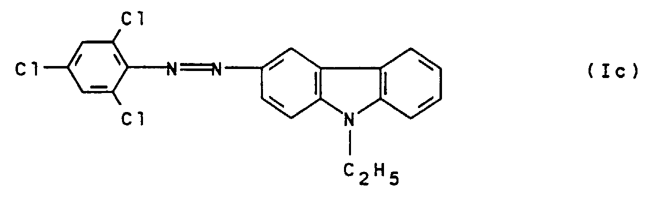 3 g einer flüssigen Präparation des Farbstoffs der Formel Ic werden in einem Färbeautoklaven aus einer Färbeflotte, bestehend aus 2 l Wasser, 2 g eines Färbereihilfsmittels auf Basis Formaldehydkondensationsprodukt und 5 g einer Puffersubstanz, die eine Mischung aus einer organischen Phosphorverbindung und einer Polycarbonsäure darstellt, 45 min bei 130°C auf 100 g eines Gewebes aus Polyethylenterephthalat gefärbt, nachdem vorher der pH-Wert der Färbeflotte mit wäßriger Natronlage auf 10 gestellt wurde. Danach wird die Färbung gespült, reduktiv gereinigt, sowie gespült und getrocknet. Man erhält so eine gelbe Färbung.

Die Färbung wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung ist praktisch farbstärke- und farbtongleich, der Farbstoff hat sich bei pH 10 praktisch nicht zersetzt.

### Beispiel 4:

24,0 g 2,6-Dichlor-4-methylsulfonylanilin werden in 100 ml 90%iger Essigsäure mit 33,3 g 40%iger Nitrosylschwefelsäure diazotiert. In der so erhaltenen Diazolösung wird bei Raumtemperatur langsam 16,7 g Carbazol zugegeben und bis zur Vervollständigung der Kupplungsreaktion gerührt. Dann wird der ausgefallene Farbstoff abfiltriert, mit 90%iger Essigsäure und dann mit Wasser gewaschen und getrocknet. 1,25 g eines 30%igen Farbstoffpulvers dieses Farbstoffs werden in 2000 g Wasser dispergiert. Die Dispersion wird mit 4 g Natriumacetat, 2 g eines handelsüblichen Dispergiermittels auf Basis eines Kondensationsprodukts aus Naphthalinsulfonsäure und Formaldehyd versetzt und mit Essigsäure auf einen pH-Wert von 4, gestellt. In die so erhaltene Färbeflotte bringt man 100 g eines texturierten Polyestergewebes auf Basis Polyethylenglykolterephthalat ein und färbt 1/2 Stunde bei 130°C. Nach anschließendem Spülen, reduktiver Nachbehandlung mit einer 0,2%igen Natriumdithionitlösung während 15 Minuten bei 70 bis 80°C, Spülen und Trocknen, erhält man eine Färbung mit hervorragenden coloristischen Eigenschaften.

In den nachfolgenden Tabellen 1 und 2 sind weitere erfindungsgemäße Farbstoffe angegeben, die auf Polyester ebenfalls farbstarke gelbe Färbungen mit hervorragenden Lichtechtheiten und sehr guten sonstigen coloristischen Eigenschaften liefern.

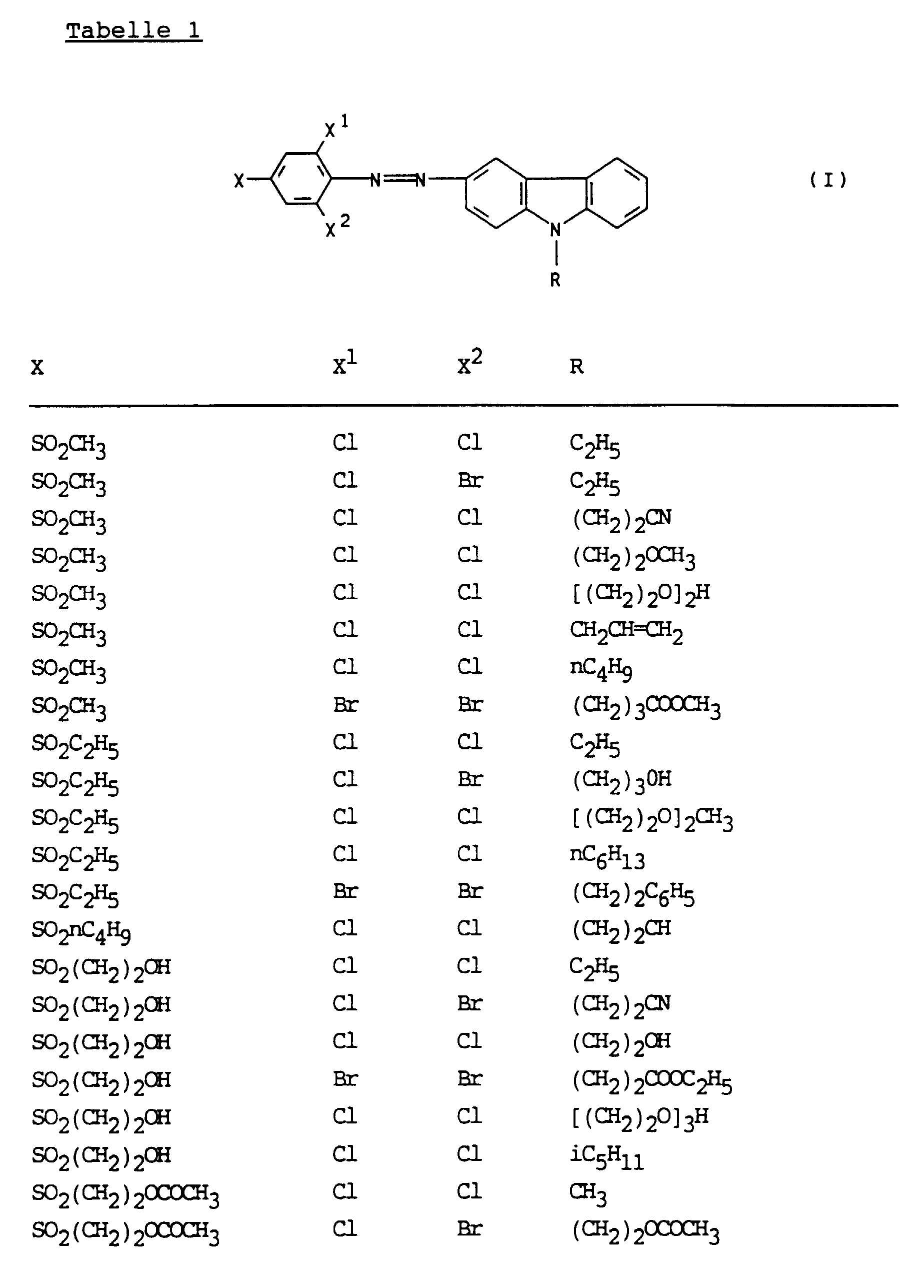

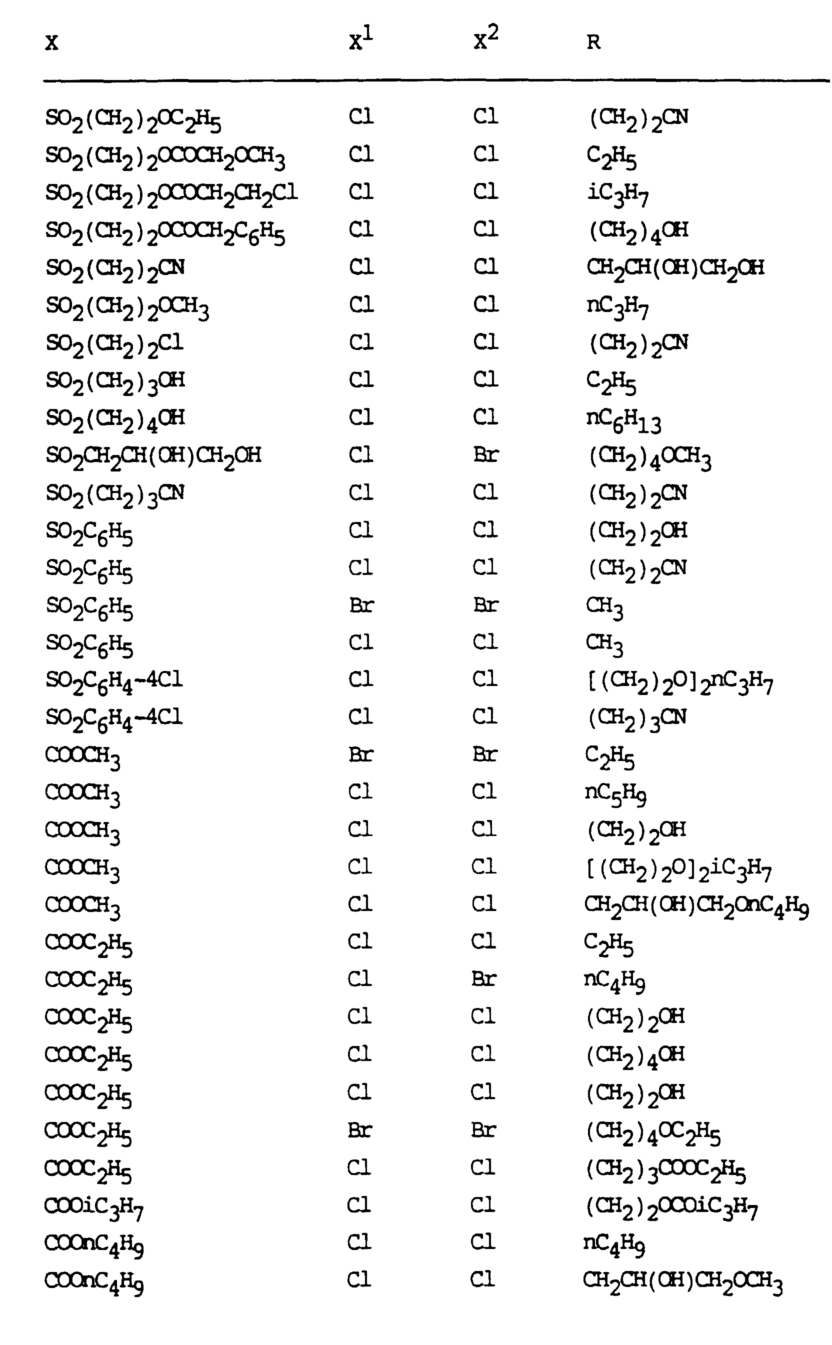

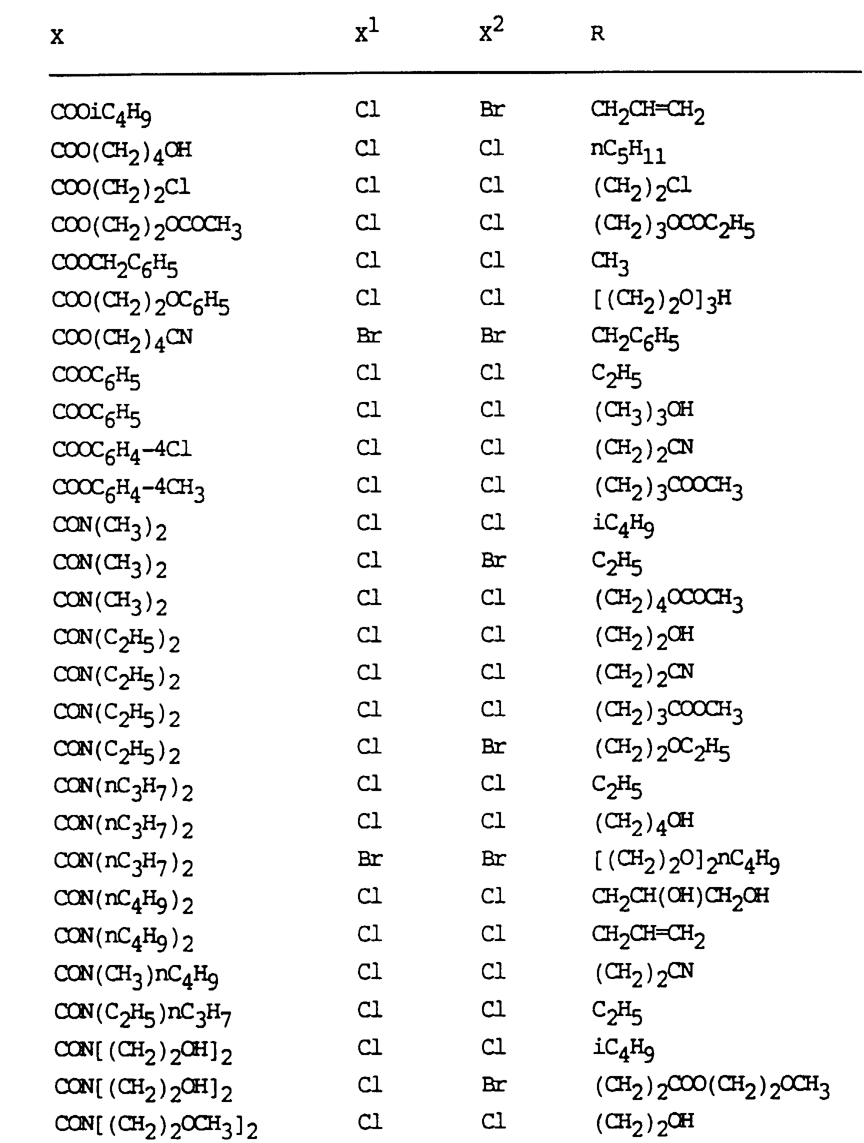

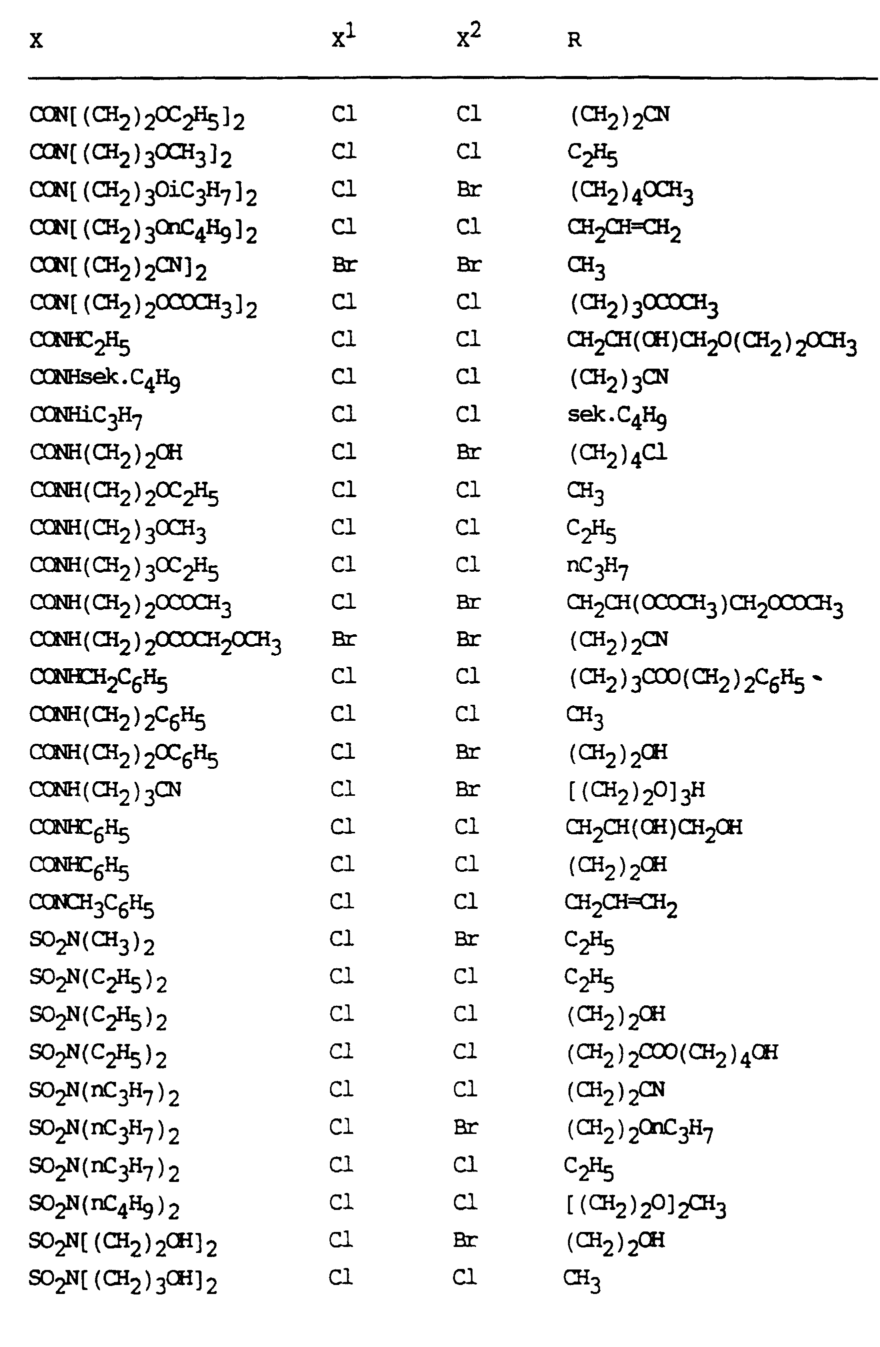

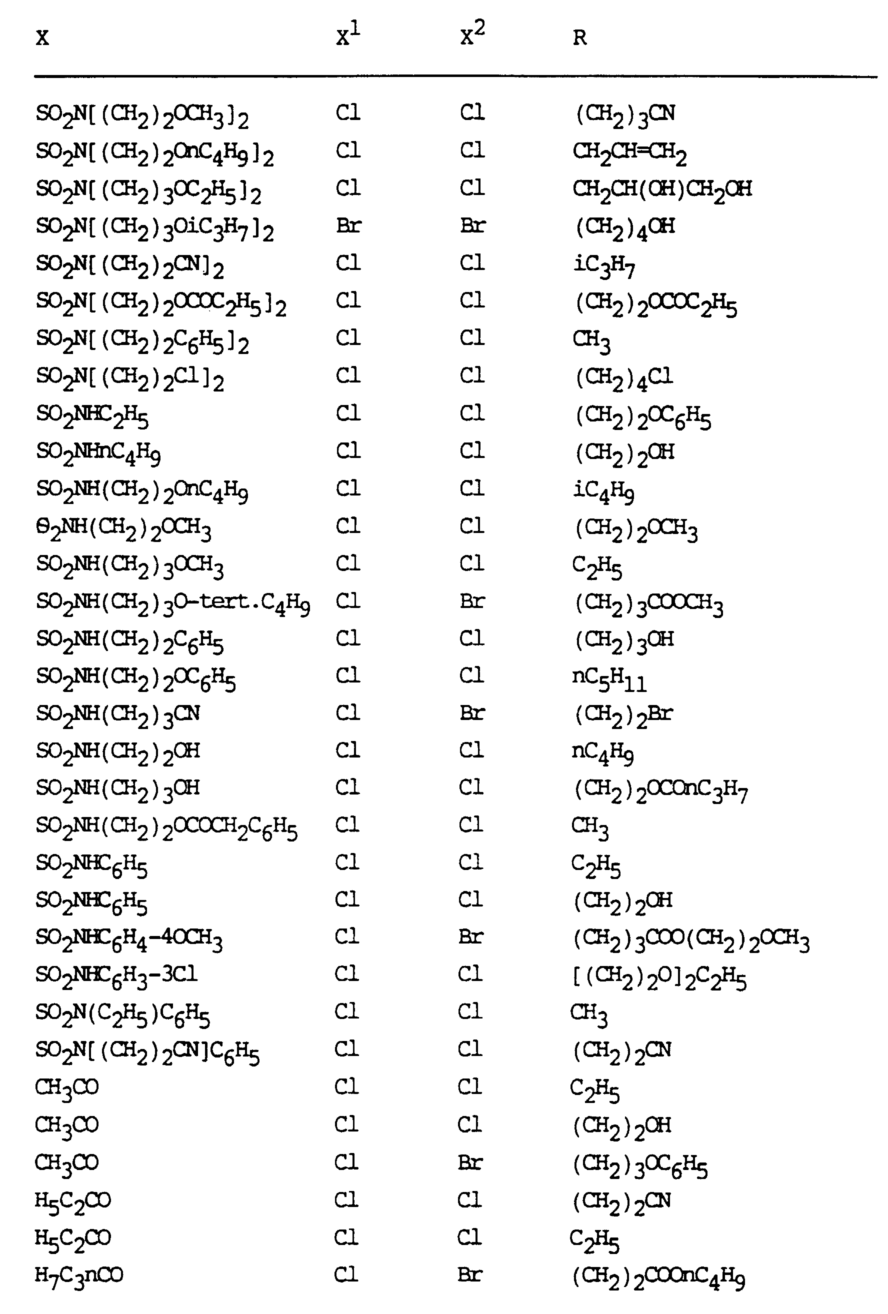

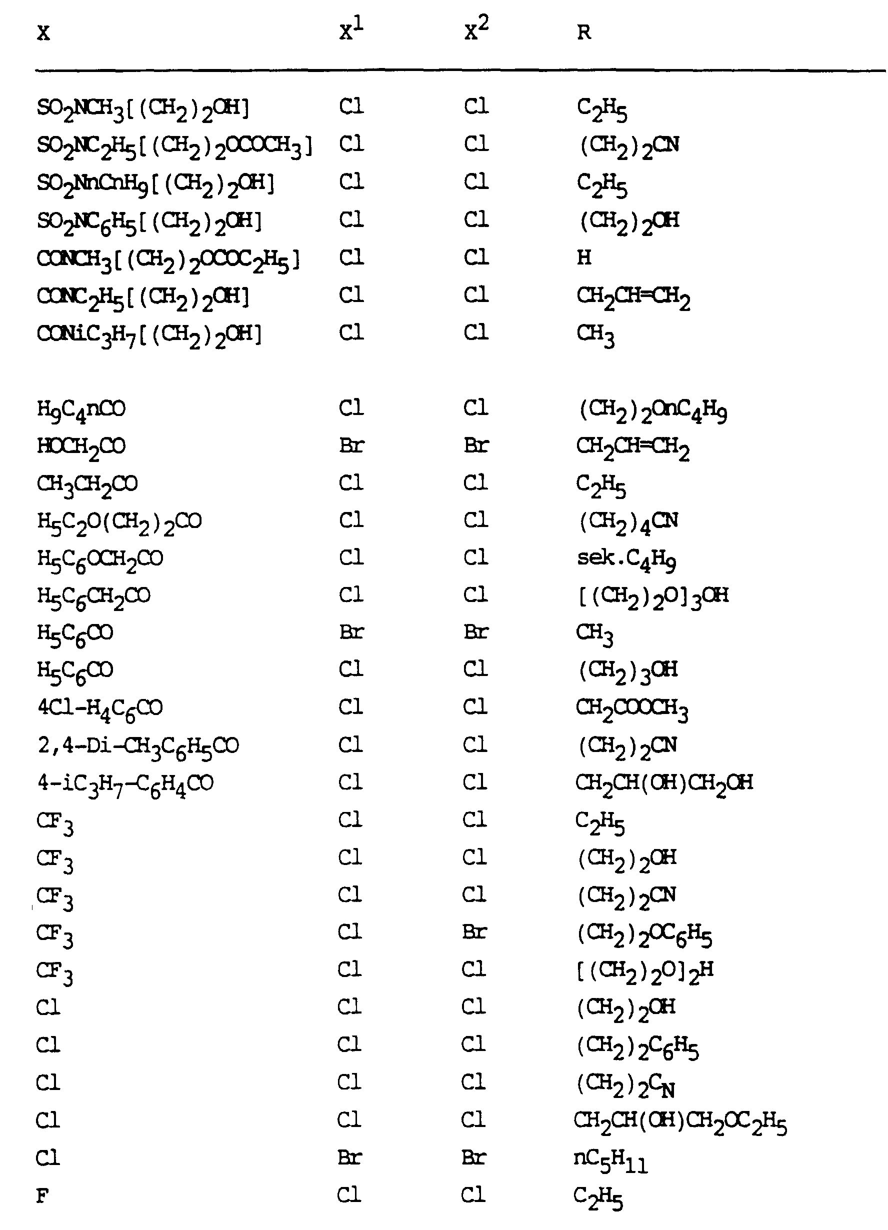

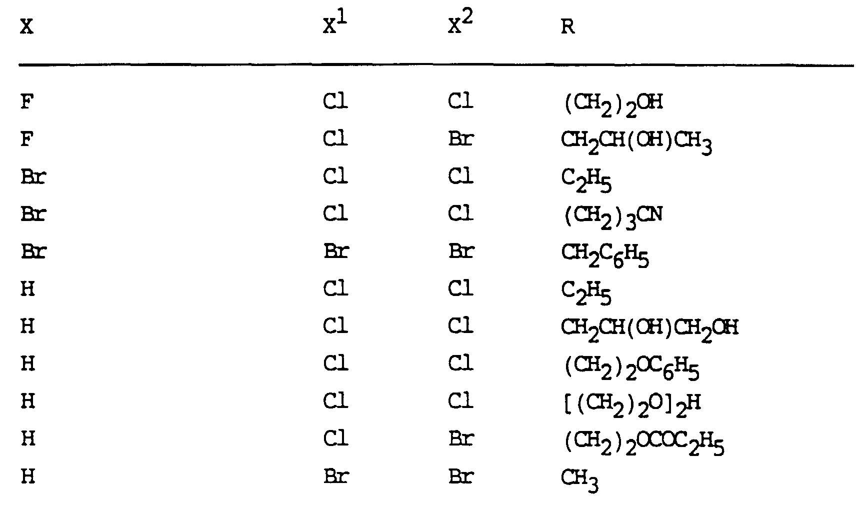

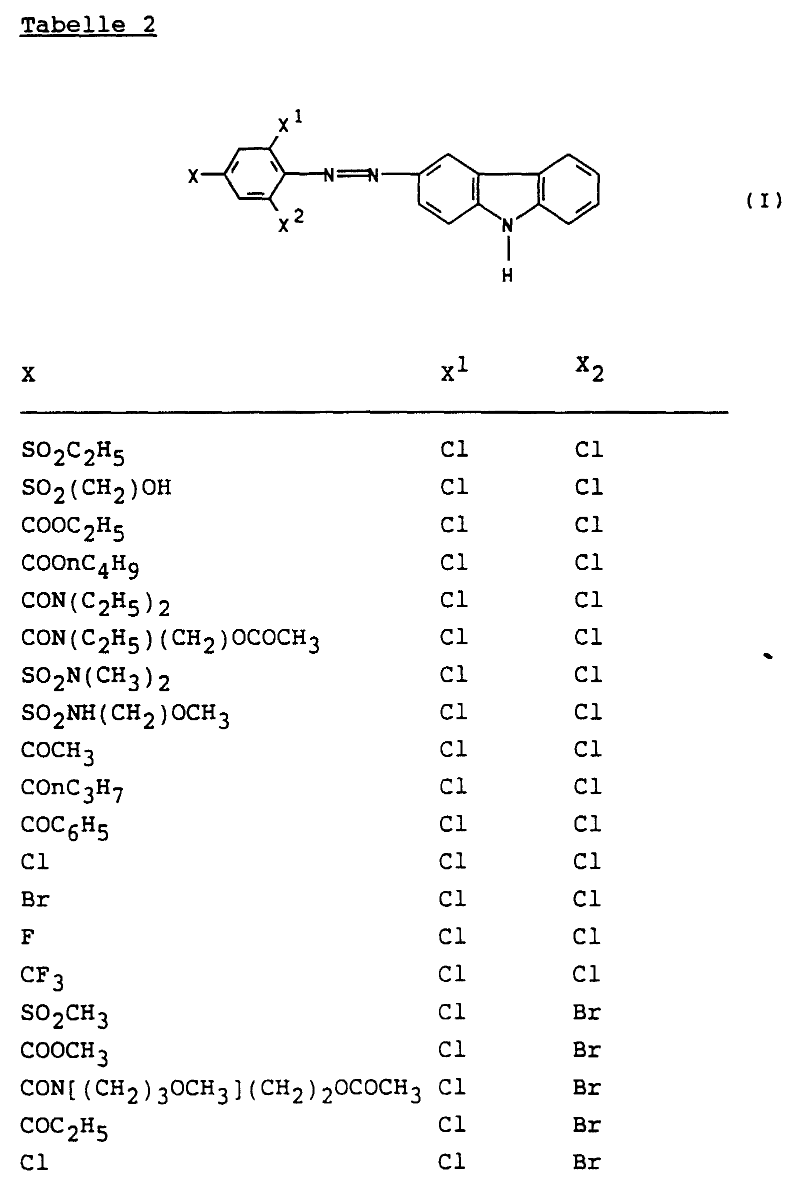

## Patentansprüche

1. Monoazocarbazolfarbstoffe der allgemeinen Formel I 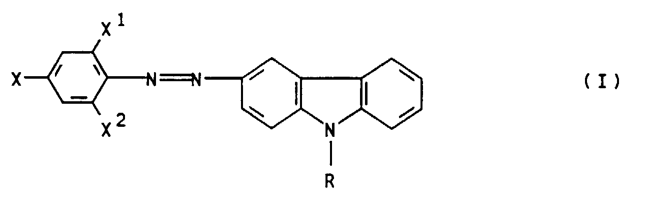 in der
**X** (C₁-C₄)-Alkylsulfonyl;
(C₁-C₄)-Alkylsulfonyl, das substituiert ist durch
Hydroxy, Chlor, Brom, Cyan, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Phenylsulfonyl;
Phenylsulfonyl, das ein- oder zweifach substituiert ist durch Methyl, Ethyl, Methoxy, Ethoxy, Methoxycarbonyl, Ethoxycarbonyl, Fluor, Chlor oder Brom;
Aminosulfonyl;
Phenylaminosulfonyl;
Phenylaminosulfonyl, das ein- oder zweifach substituiert ist durch Methyl, Ethyl, Methoxy, Ethoxy, Methoxycarbonyl, Ethoxycarbonyl, Fluor, Chlor oder Brom;
(C₁-C₄)-Alkylaminosulfonyl;
(C₁-C₄)-Alkylaminosulfonyl, das substituiert ist durch Hydroxy, Chlor, Brom, Cyan, Phenyl, Phenoxy, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Di-(C₁-C₄)-alkylaminosulfonyl;
Di-(C₁-C₄)-alkylaminosulfonyl, wobei eine oder beide Alkylgruppen unabhängig voneinander substituiert sind durch Hydroxy, Chlor, Brom, Cyan, Phenyl, Phenoxy, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
(C₁-C₄)-Alkylcarbonyl;
(C₁-C₄)-Alkylcarbonyl, das durch Hydroxy, Chlor, Brom, Cyan, (C₁-C₄)-Alkoxy, Phenoxy oder Phenyl substituiert ist;
Phenylcarbonyl;
Phenylcarbonyl, das ein- oder zweifach substituiert ist durch Methyl, Ethyl, Methoxy, Ethoxy, Methoxycarbonyl, Ethoxycarbonyl, Fluor, Chlor oder Brom;
(C₁-C₄)-Alkoxycarbonyl;
(C₁-C₄)-Alkoxycarbonyl, das substituiert ist durch Hydroxy, Chlor, Brom, Cyan, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Phenoxycarbonyl;
Phenoxycarbonyl, das ein- oder zweifach substituiert ist durch Methyl, Methoxy oder Chlor;
Aminocarbonyl;
Phenylaminocarbonyl;
Phenylaminocarbonyl, das ein- oder zweifach substituiert ist durch Methyl, Ethyl, Methoxy, Ethoxy, Methoxycarbonyl, Ethoxycarbonyl, Fluor, Chlor oder Brom;
(C₁-C₄)-Alkylaminocarbonyl;
(C₁-C₄)-Alkylaminocarbonyl, das substituiert ist durch Hydroxy, Chlor, Brom, Cyan, Phenyl, Phenoxy, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Di-(C₁-C₄)-alkylaminocarbonyl;
Di-(C₁-C₄)-alkylaminocarbonyl, wobei eine oder beide Alkylgruppen unabhängig voneinander substituiert sind durch Hydroxy, Chlor, Brom, Cyan, Phenyl, Phenoxy, (C₁-C₄)-Alkoxy, (C₁-C₄)-Alkylcarbonyloxy oder durch (C₁-C₄)-Alkylcarbonyloxy, das durch Hydroxy, (C₁-C₄)-Alkoxy, Phenoxy, Phenyl, Chlor, Brom oder Cyan substituiert ist;
Trifluormethyl;
Fluor;
Chlor;
Brom; oder
Wasserstoff bedeutet,
**X**^{**1**} **und X**^{**2**} unabhängig voneinander Chlor oder Brom bedeuten; und
**R** Wasserstoff; (C₁-C₆)-Alkyl;
(C₁-C₆)-Alkyl, das substituiert ist durch Cyan, Hydroxy, Chlor, Brom, (C₁-C₄)-Alkoxy, Alkoxyalkoxy mit insgesamt bis zu sechs Kohlenstoffatomen, Hydroxyethoxy, Hydroxyethoxyethoxy, Phenoxy, Phenyl, (C₁-C₄)-Alkylcarbonyloxy, (C₁-C₄)-Alkoxycarbonyl oder durch Hydroxy, (C₁-C₄)-Alkoxy, Phenyl, Phenoxy, Chlor, Brom oder Cyan substituiertes (C₁-C₄)-Alkylcarbonyloxy oder (C₁-C₄)-Alkoxycarbonyl; oder Allyl bedeutet.

2. Monoazocarbazolfarbstoffe gemäß Anspruch 1, dadurch gekennzeichnet, daß X
(C₁-C₄)-Alkylsulfonyl;
(C₁-C₄)-Alkylsulfonyl, das durch Hydroxy, Chlor, Brom, Cyan, (C₁-C₄)-Alkoxy oder (C₁-C₄)-Alkylcarbonyloxy substituiert ist,
(C₁-C₄)-Alkylaminosulfonyl,
(C₁-C₄)-Alkylaminosulfonyl, das substituiert ist durch Hydroxy, Chlor, Brom, Cyan oder (C₁-C₄)-Alkoxy;
Di-(C₁-C₄)-alkylaminosulfonyl,
Di-(C₁-C₄)-alkylaminosulfonyl, wobei eine oder beide Alkylgruppen unabhängig voneinander substituiert sind durch Hydroxy, Chlor, Brom, Cyan oder (C₁-C₄)-Alkoxy;
(C₁-C₄)-Alkylcarbonyl;
(C₁-C₄)-Alkylcarbonyl, das substituiert ist durch Hydroxy, Chlor, Brom, Cyan oder (C₁-C₄)-Alkoxy;
(C₁-C₄)-Alkoxycarbonyl;
(C₁-C₄)-Alkoxycarbonyl, das substituiert ist durch Hydroxy, Chlor, Brom, Cyan oder (C₁-C₄)-Alkoxy;
(C₁-C₄)-Alkylaminocarbonyl;
(C₁-C₄)-Alkylaminocarbonyl, das substituiert ist durch Hydroxy, Chlor, Brom, Cyan oder (C₁-C₄)-Alkoxy;
Di-(C₁-C₄)-alkylaminocarbonyl, wobei eine oder beide Alkylgruppen unabhängig voneinander substituiert sind durch Hydroxy, Chlor, Brom, Cyan oder (C₁-C₄)-Alkoxy;
Trifluormethyl;
Fluor;
Chlor;
Brom; oder
Wasserstoff bedeutet.

3. Monoazocarbazolfarbstoffe gemäß Anspruch 1 und/oder 2, dadurch gekennzeichnet, daß R
Wasserstoff;(C₁-C₆)-Alkyl;
(C₂-C₄)-Alkyl, das substituiert ist durch Cyan, Hydroxy, Chlor, Brom, (C₁-C₄)-Alkoxy, Alkoxyalkoxy mit insgesamt bis zu 6 Kohlenstoffatomen, Hydroxyethoxy, Hydroxyethoxyethoxy oder (C₁-C₄)-Alkylcarbonyloxy; oder
Allyl bedeutet.

4. Mischungen von zwei oder mehreren Monoazocarbazolfarbstoffen der allgemeinen Formel I gemäß Anspruch 1.

5. Mischungen von einem oder mehreren Monoazocarbazolfarbstoffen der allgemeinen Formel I gemäß Anspruch 1 und einem oder mehreren Farbstoffen, wie sie üblicherweise zum Färben von Automobilbezugsstoffen verwendet werden.

6. Verfahren zur Herstellung von Monoazocarbazolfarbstoffen der allgemeinen Formel I gemäß Anspruch 1, dadurch gekennzeichnet, daß ein Amin der allgemeinen Formel II 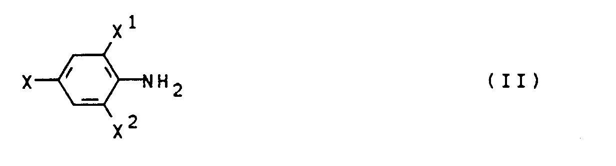 worin
X, X¹ und X² wie oben angegeben definiert sind, diazotiert und auf Verbindungen der allgemeinen Formel III 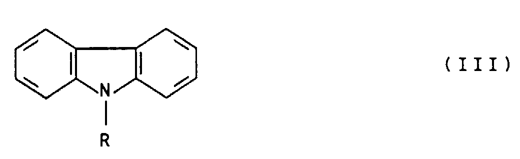 worin
R wie oben angegeben definiert ist, kuppelt.

7. Verwendung von Farbstoffen der allgemeinen Formel I gemäß einem der Ansprüche 1 bis 3 oder einer Farbstoffmischung gemäß einem der Ansprüche 4 und 5 zum Färben und Bedrucken von hydrophoben synthetischen Materialien.

8. Verwendung gemäß Anspruch 7, dadurch gekennzeichnet, daß Automobilbezugsstoffe gefärbt oder bedruckt werden.

9. Verwendung gemäß Anspruch 7 und/oder 8, dadurch gekennzeichnet, daß bei pH 8 bis pH 11 gefärbt wird.

## Claims

1. Monoazocarbazole dyes of the general formula I 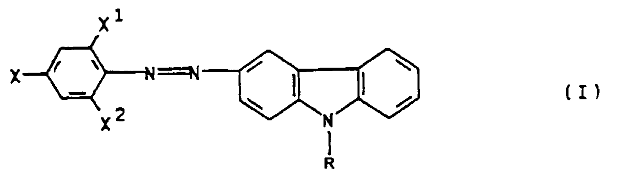 in which
**X** denotes (C₁-C₄)-alkylsulphonyl;
(C₁-C₄)-alkylsulphonyl which is substituted by hydroxyl, chlorine, bromine, cyano, (C₁-C₄)-alkoxy, (C₁-C₄)-alkylcarbonyloxy or by (C₁-C₄)-alkylcarbonyloxy which is substituted by hydroxyl, (C₁-C₄)-alkoxy, phenoxy, phenyl, chlorine, bromine or cyano;
phenylsulphonyl;
phenylsulphonyl which is mono- or disubstituted by methyl, ethyl, methoxy, ethoxy, methoxycarbonyl, ethoxycarbonyl, fluorine, chlorine or bromine;
aminosulphonyl;
phenylaminosulphonyl;
phenylaminosulphonyl which is mono- or disubstituted by methyl, ethyl, methoxy, ethoxy, methoxycarbonyl, ethoxycarbonyl, fluorine, chlorine or bromine;
(C₁-C₄)-alkylaminosulphonyl;
(C₁-C₄)-alkylaminosulphonyl which is substituted by hydroxyl, chlorine, bromine, cyano, phenyl, phenoxy, (C₁-C₄) -alkoxy, (C₁-C₄)-alkylcarbonyloxy or by (C₁-C₄)-alkylcarbonyloxy which is substituted by hydroxyl, (C₁-C₄)-alkoxy, phenoxy, phenyl, chlorine, bromine or cyano; di-(C₁-C₄)-alkylaminosulphonyl;
di-(C₁-C₄)-alkylaminosulphonyl where one or both alkyl groups are substituted, independently of one another, by hydroxyl, chlorine, bromine, cyano, phenyl, phenoxy, (C₁-C₄)-alkoxy, (C₁-C₄)-alkylcarbonyloxy or by (C₁-C₄)-alkylcarbonyloxy which is substituted by hydroxyl, (C₁-C₄)-alkoxy, phenoxy, phenyl, chlorine, bromine or cyano; (C₁-C₄)-alkylcarbonyl;
(C₁-C₄)-alkylcarbonyl which is substituted by hydroxyl, chlorine, bromine, cyano, (C₁-C₄)-alkoxy, phenoxy or phenyl;
phenylcarbonyl;
phenylcarbonyl which is mono- or disubstituted by methyl, ethyl, methoxy, ethoxy, methoxycarbonyl, ethoxycarbonyl, fluorine, chlorine or bromine;
(C₁-C₄)-alkoxycarbonyl;
(C₁-C₄)-alkoxycarbonyl which is substituted by hydroxyl, chlorine, bromine, cyano, (C₁-C₄)-alkoxy, (C₁-C₄)-alkylcarbonyloxy or by (C₁-C₄)-alkylcarbonyloxy which is substituted by hydroxyl, (C₁-C₄)-alkoxy, phenoxy, phenyl, chlorine, bromine or cyano;
phenoxycarbonyl;
phenoxycarbonyl which is mono- or disubstituted by methyl, methoxy or chlorine;
aminocarbonyl;
phenylaminocarbonyl;
phenylaminocarbonyl which is mono- or disubstituted by methyl, ethyl, methoxy, ethoxy, methoxycarbonyl, ethoxycarbonyl, fluorine, chlorine or bromine;
(C₁-C₄)-alkylaminocarbonyl;
(C₁-C₄)-alkylaminocarbonyl, which is substituted by hydroxyl, chlorine, bromine, cyano, phenyl, phenoxy, (C₁-C₄)-alkoxy, (C₁-C₄)-alkylcarbonyloxy or by (C₁-C₄)-alkylcarbonyloxy which is substituted by hydroxyl, (C₁-C₄)-alkoxy, phenoxy, phenyl, chlorine, bromine or cyano; di-(C₁-C₄)-alkylaminocarbonyl;
di-(C₁-C₄)-alkylaminocarbonyl where one or both alkyl groups are substituted, independently of one another, by hydroxyl, chlorine, bromine, cyano, phenyl, phenoxy, (C₁-C₄)-alkoxy, (C₁-C₄)-alkylcarbonyloxy or by (C₁-C₄)-alkylcarbonyloxy which is substituted by hydroxyl, (C₁-C₄)-alkoxy, phenoxy, phenyl, chlorine, bromine or cyano; trifluoromethyl;
fluorine;
chlorine;
bromine; or
hydrogen,
X¹ and X² denote, independently of one another, chlorine or bromine; and
**R** denotes hydrogen; (C₁-C₆)-alkyl;
(C₁-C₆)-alkyl which is substituted by cyano, hydroxyl, chlorine, bromine, (C₁-C₄)-alkoxy, alkoxyalkoxy having a total of up to six carbon atoms, hydroxyethoxy, hydroxyethoxyethoxy, phenoxy, phenyl, (C₁-C₄)-alkylcarbonyloxy, (C₁-C₄)-alkoxycarbonyl or hydroxyl-, (C₁-C₄)-alkoxy-, phenyl-, phenoxy-, chlorine-, bromine- or cyano-substituted (C₁-C₄)-alkylcarbonyloxy or (C₁-C₄)-alkoxycarbonyl;
or allyl.

2. Monoazocarbazole dyes according to Claim 1, characterized in that X denotes
(C₁-C₄)-alkylsulphonyl;
(C₁-C₄)-alkylsulphonyl which is substituted by hydroxyl, chlorine, bromine, cyano, (C₁-C₄)-alkoxy or (C₁-C₄)-alkylcarbonyloxy,
(C₁-C₄)-alkylaminosulphonyl,
(C₁-C₄)-alkylaminosulphonyl which is substituted by hydroxyl, chlorine, bromine, cyano or (C₁-C₄)-alkoxy;
di-(C₁-C₄)-alkylaminosulphonyl,
di-(C₁-C₄)-alkylaminosulphonyl where one or both alkyl groups are substituted, independently of one another, by hydroxyl, chlorine, bromine, cyano or (C₁-C₄)-alkoxy;
(C₁-C₄)-alkylcarbonyl;
(C₁-C₄)-alkylcarbonyl which is substituted by hydroxyl, chlorine, bromine, cyano or (C₁-C₄)-alkoxy;
(C₁-C₄)-alkoxycarbonyl;
(C₁-C₄)-alkoxycarbonyl which is substituted by hydroxyl, chlorine, bromine, cyano or (C₁-C₄)-alkoxy;
(C₁-C₄)-alkylaminocarbonyl;
(C₁-C₄)-alkylaminocarbonyl which is substituted by hydroxyl, chlorine, bromine, cyano or (C₁-C₄)-alkoxy;
di-(C₁-C₄)-alkylaminocarbonyl where one or both alkyl groups are substituted, independently of one another, by hydroxyl, chlorine, bromine, cyano or (C₁-C₄)-alkoxy; trifluoromethyl;
fluorine;
chlorine;
bromine; or
hydrogen.

3. Monoazocarbazole dyes according to Claim 1 and/or 2, characterized in that R denotes
hydrogen; (C₁-C₆)-alkyl; (C₂-C₄)-alkyl which is substituted by cyano, hydroxyl, chlorine, bromine, (C₁-C₄)-alkoxy, alkoxyalkoxy having a total of up to 6 carbon atoms, hydroxyethoxy, hydroxyethoxyethoxy or (C₁-C₄)-alkylcarbonyloxy; or allyl.

4. Mixtures of two or more monoazocarbazole dyes of the general formula I according to Claim 1.

5. Mixtures of one or more monoazocarbazole dyes of the general formula I according to Claim 1 and one or more dyes such as are customarily used for dyeing automotive cover fabrics.

6. Process for preparing monoazocarbazole dyes of the general formula I according to Claim 1, characterized in that an amine of the general formula II 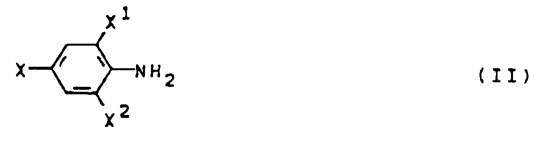 in which
X, X¹ and X² are as defined above, is diazotized, and the resulting diazo compound is coupled onto compounds of the general formula III 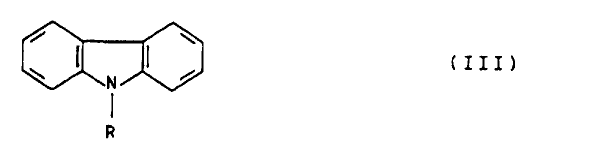 in which
R is as defined above.

7. Use of dyes of the general formula I according to one of Claims 1 to 3 or of a dye mixture according to one of Claims 4 and 5 for dyeing and printing hydrophobic synthetic materials.

8. Use according to Claim 7, characterized in that automotive cover fabrics are dyed or printed.

9. Use according to Claim 7 and/or 8, characterized in that dyeing is carried out at pH 8 to pH 11.

## Revendications

1. Colorants mono-azocarbazoliques de formule générale I 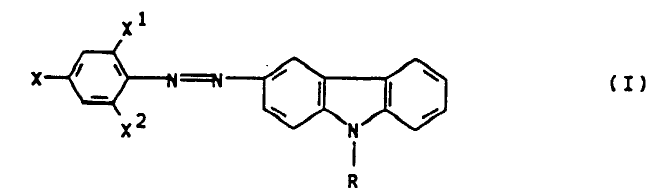 dans laquelle
X représente un (C₁-C₄)-alkylsulfonyle ;
un (C₁-C₄)-alkylsulfonyle qui est substitué par un hydroxy, un chloro, un bromo, un cyano, un (C₁-C₄)-alcoxy, un (C₁-C₄)-alkylcarbonyloxy ou par un (C₁-C₄)-alkylcarbonyloxy qui est substitué par un hydroxy, un (C₁-C₄)-alcoxy, un phénoxy, un phényle, un chloro, un bromo ou un cyano ;
un phénylsulfonyle ;
un phénylsulfonyle qui est substitué une ou deux fois par un méthyle, un éthyle, un méthoxy, un éthoxy, un méthoxycarbonyle, un éthoxycarbonyle, un fluoro, un chloro ou un bromo ;
un aminosulfonyle ;
un phénylaminosulfonyle ;
un phénylaminosulfonyle qui est substitué une ou deux fois par un méthyle, un éthyle, un méthoxy, un éthoxy, un méthoxycarbonyle, un éthoxycarbonyle, un fluoro, un chloro ou un bromo ;
un (C₁-C₄)-alkylaminosulfonyle ;
un (C₁-C₄)-alkylaminosulfonyle qui est substitué par un hydroxy, un chloro, un bromo, un cyano, un phényle, un phénoxy, un (C₁-C₄)-alcoxy, un (C₁-C₄)-alkylcarbonyloxy ou par un (C₁-C₄)-alkylcarbonyloxy qui est substitué par un hydroxy, un (C₁-C₄)-alcoxy, un phénoxy, un phényle, un chloro, un bromo ou un cyano ;
un di-(C₁-C₄)-alkylaminosulfonyle ;
un di-(C₁-C₄)-alkylaminosulfonyle dans lequel un ou les deux groupes alkyle sont substitués, indépendamment l'un de l'autre, par un hydroxy, un chloro, un bromo, un cyano, un phényle, un phénoxy, un (C₁-C₄)-alcoxy, un (C₁-C₄)-alkylcarbonyloxy ou par un (C₁-C₄)-alkylcarbonyloxy qui est substitué par un hydroxy, un (C₁-C₄)-alcoxy, un phénoxy, un phényle, un chloro, un bromo ou un cyano ;
un (C₁-C₄)-alkylcarbonyle ;
un (C₁-C₄)-alkylcarbonyle qui est substitué par un hydroxy, un chloro, un bromo, un cyano, un (C₁-C₄)-alcoxy, un phénoxy ou un phényle ;
un phénylcarbonyle ;
un phénylcarbonyle qui est substitué une ou deux fois par un méthyle, un éthyle, un méthoxy, un éthoxy, un méthoxycarbonyle, un éthoxycarbonyle, un fluoro, un chloro ou un bromo ;
un (C₁-C₄)-alcoxycarbonyle ;
un (C₁-C₄)-alcoxycarbonyle qui est substitué par un hydroxy, un chloro, un bromo, un cyano, un (C₁-C₄)-alcoxy, un (C₁-C₄)-alkylcarbonyloxy ou par un (C₁-C₄)-alkylcarbonyloxy qui est substitué par un hydroxy, un (C₁-C₄)-alcoxy, un phénoxy, un phényle, un chloro, un bromo ou un cyano ;
un phénoxycarbonyle ;
un phénoxycarbonyle qui est substitué une ou deux fois par un méthyle, un méthoxy ou un chloro ;
un aminocarbonyle;
un phénylaminocarbonyle ;
un phénylaminocarbonyle qui est substitué une ou deux fois par un méthyle, un éthyle, un méthoxy, un éthoxy, un méthoxycarbonyle, un éthoxycarbonyle, un fluoro, un chloro ou un bromo ;
un (C₁-C₄)-alkylaminocarbonyle ;
un (C₁-C₄)-alkylaminocarbonyle qui est substitué par un hydroxy, un chloro, un bromo, un cyano, un phényle, un phénoxy, un (C₁-C₄)-alcoxy, un (C₁-C₄)-alkylcarbonyloxy, ou par un (C₁-C₄)-alkylcarbonyloxy qui est substitué par un hydroxy, un (C₁-C₄)-alcoxy, un phénoxy, un phényle, un chloro, un bromo ou un cyano ;
un di- (C₁-C₄) -alkylaminocarbonyle ;
un di-(C₁-C₄)-alkylaminocarbonyle, dans lequel un ou les deux groupes alkyle sont substitués, indépendamment l'un de l'autre, par un hydroxy, un chloro, un bromo, un cyano, un phényle, un phénoxy, un (C₁-C₄)-alcoxy, un (C₁-C₄)-alkylcarbonyloxy ou par un (C₁-C₄)-alkylcarbonyloxy qui est substitué par un hydroxy, un (C₁-C₄)-alcoxy, un phénoxy, un phényle, un chloro, un bromo ou un cyano ;
un trifluorométhyle ;
un fluoro ;
un chloro ;
un bromo ; ou
un hydrogène ;
**X**^{**1**} **et X**^{**2**} représentent, indépendamment l'un de l'autre, un chloro ou un bromo ; et
**R** représente un hydrogène ; un (C₁-C₆)-alkyle ;
un (C₁-C₆)-alkyle qui est substitué par un cyano, un hydroxy, un chloro, un bromo, un (C₁-C₄)-alcoxy, un alcoxyalcoxy ayant au total jusqu'à six atomes de carbone, un hydroxyéthoxy, un hydroxyéthoxyéthoxy, un phénoxy, un phényle, un (C₁-C₄)-alkylcarbonyloxy, un (C₁-C₄)-alcoxycarbonyle ou un (C₁-C₄)-alkylcarbonyloxy ou (C₁-C₄)-alcoxycarbonyle substitué par un hydroxy, un (C₁-C₄)-alcoxy, un phényle, un phénoxy, un chloro, un bromo ou un cyano ;
ou un allyle.

2. Colorants mono-azocarbazoliques selon la revendication 1, caractérisés en ce que X représente un (C₁-C₄)-alkylsulfonyle ;
un (C₁-C₄)-alkylsulfonyle qui est substitué par un hydroxy, un chloro, un bromo, un cyano, un (C₁-C₄)-alcoxy ou un (C₁-C₄)-alkylcarbonyloxy ;
un (C₁-C₄)-alkylaminosulfonyle ;
un (C₁-C₄)-alkylaminosulfonyle qui est substitué par un hydroxy, un chloro, un bromo, un cyano ou un (C₁-C₄)-alcoxy ;
un di-(C₁-C₄)-alkylaminosulfonyle ;
un di-(C₁-C₄)-alkylaminosulfonyle, dans lequel un ou les deux groupes alkyle sont substitués, indépendamment l'un de l'autre, par un hydroxy, un chloro, un bromo, un cyano ou un (C₁-C₄)-alcoxy ;
un (C₁-C₄)-alkylcarbonyle ;
un (C₁-C₄)-alkylcarbonyle qui est substitué par un hydroxy, un chloro, un bromo, un cyano ou un (C₁-C₄)-alcoxy ;
un (C₁-C₄)-alcoxycarbonyle ;
un (C₁-C₄)-alcoxycarbonyle qui est substitué par un hydroxy, un chloro, un bromo, un cyano ou un (C₁-C₄)-alcoxy ;
un (C₁-C₄)-alkylaminocarbonyle ;
un (C₁-C₄)-alkylaminocarbonyle qui est substitué par un hydroxy, un chloro, un bromo, un cyano ou un (C₁-C₄)-alcoxy ;
un di-(C₁-C₄)-alkylaminocarbonyle dans lequel un ou les deux groupes alkyle sont substitués, indépendamment l'un de l'autre, par un hydroxy, un chloro, un bromo, un cyano ou un (C₁-C₄)-alcoxy ;
un trifluorométhyle ;
un fluoro ;
un chloro ;
un bromo ; ou
un hydrogène.

3. Colorants mono-azocarbazoliques selon la revendication 1 et/ou 2, caractérisés en ce que R représente
un hydrogène ; un (C₁-C₆)-alkyle ;
un (C₂-C₄)-alkyle qui est substitué par un cyano, un hydroxy, un chloro, un bromo, un (C₁-C₄)-alcoxy, un alcoxyalcoxy ayant au total jusqu'à 6 atomes de carbone, un hydroxyéthoxy, un hydroxyéthoxyéthoxy ou un (C₁-C₄)-alkylcarbonyloxy; ou
un allyle.

4. Mélanges de deux colorants mono-azocarbazoliques ou plus de formule générale I selon la revendication 1.

5. Mélanges d'un ou de plusieurs colorants mono-azocarbazoliques de formule générale I selon la revendication 1 et d'un ou de plusieurs colorants tels qu'ils sont habituellement utilisés pour la teinture de tissus de capitonnage pour automobiles.

6. Procédé de préparation de colorants mono-azocarbazoliques de formule générale I selon la revendication 1, caractérisé en ce qu'une amine de formule générale II 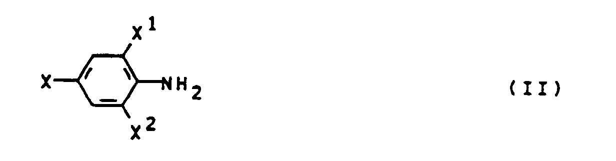 dans laquelle
X, X¹ et X² sont tels que définis ci-dessus, est diazotée et est couplée à des composés de formule générale III 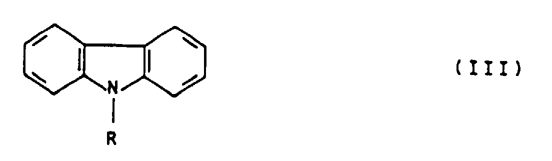 dans laquelle
R est tel que défini ci-dessus.

7. Utilisation de colorants de formule générale I selon l'une quelconque des revendications 1 à 3 ou d'un mélange de colorants selon l'une quelconque des revendications 4 et 5 pour la teinture et l'impression de matériaux synthétiques hydrophobes.

8. Utilisation selon la revendication 7, caractérisée en ce que des tissus de capitonnage pour automobiles sont teints ou imprimés.

9. Utilisation selon la revendication 7 et/ou 8, caractérisée en ce que la teinture est réalisée entre pH 8 et pH 11.
